# EUROPEAN PATENT SPECIFICATION

(11) **EP 0 317 196 B1**
(45) Date of publication and mention of the grant of the patent: **30.06.1993**
(21) Application number: 88310647.8
(22) Date of filing: 11.11.1988
(51) Int. Cl.: G03B 21/32, G11B 15/10, B65H 20/26

(54) **Endless loop transport and storage system**
Endlosschleifentransport- und Speichersystem
Système de transport et d'emmagasinage de bandes sans fin

(30) Priority: 13.11.1987 US 120031
(43) Date of publication of application: 24.05.1989
(73) Proprietor: CHRISTIE ELECTRIC CORPORATION, Gardena California 90248 (US)
(72) Inventor: Eddy, Richard Paul, Gardena California 90247 (US)
(74) Representative: Harrison, David Christopher

(56) References cited:
- EP-A- 0 215 680
- EP-A- 0 270 308
- FR-A- 2 417 124

## Description

This invention relates generally to a system for storing a quantity of continuous strip material such as tape or film. More particularly, the invention describes a method and apparatus for continuously storing motion picture film on edge on a flat rotating platter, as part of an endless loop film projection system.

It has long been recognized in motion picture projection that an endless loop system is desirable, in order to eliminate the need for manual rewinding and rethreading of film in repeated renditions of a program. A number of attempts have been made to provide for storing the film in a coil on a rotating turntable or platter in such a way as to minimize relative longitudinal movement between adjacent film layers in the coil, and yet permit, during each platter revolution, a predetermined length of film to be withdrawn from the center of the coil while the identical length of film is being added to the outside of the coil. The prior systems produce a series of angularly spaced, inwardly directed rounded cusps in the film coil, and are exemplified by the two U.S. patents to Johnson, 4,066,221 and 4,186,891, the U.S. patent 4,208,018 to Wilkinson, and the U.S. patent 4,504,025 to Potts. These patents, in common with other prior systems include an application apparatus for incoming film which feeds or applies the incoming film to the rotating platter and means for shaping the film in the coil into a number of spaced inwardly directed cusps.

In another apparatus (EP-A-215 680) the strip or film is transported from the edge of the platter toward the center of the coil by the tension of the strip in the outer layers. A cam is carried for rotation with the platter, with the cam having alternating arcuate sections and chord sections. The strip is applied to the outer periphery of the coil by a mechanism which includes a cam follower riding on the cam track as the platter rotates. This apparatus provides the desired cusps in the coil of film, but also involves an undesired tensioning of the film with a resultant rubbing of one layer of film against the adjacent layer.

A variation of the apparatus referred to in the preceding paragraph is shown in our copending application EP-A-270 308 (not prepublished) wherein a fixed roller is positioned at the arcuate outer periphery for urging the coil inward as the roller contacts the arcuate periphery of the coil.

Another apparatus is shown in the copending US-A-4 836 463 (not prepublished). In this apparatus the relationship of the application roller and the pusher roller is modified from that used in earlier units while the coil configuration is maintained essentially the same. The pusher roller is carried on the application arm so that it moves in and out with the in and out movement of the cam follower. In one embodiment, a four bar link is utilized to adjust movement of the pusher arm with reference to the application arm. Also, a servo arrangement provides a feedback type of operation for monitoring the amount of film being taken up on the platter as the platter rotates for automatically controlling the amount of film being wound onto the platter per revolution.

The two Eddy applications discussed above are assigned to the same assignee as is the present application.

Motion picture film has a tendency to curl in a transverse direction when a length of the film is in an unwound strip condition, as is the case when film is moving from the projector to the coil on the platter. Curling is a problem caused by the change in dimension of the emulsion side of the film with respect to the base side of the film and is exaggerated by changes in environmental conditions such as temperature and humidity.

While the apparatus referred to in the preceding paragraphs work satisfactorily in many installations, there are some situations, particularly high humidity environments, wherein problems in operation have been encountered. As a result, further improvements and changes in design and operation have been developed and are the subject of the present application.

It has been found that the curling problem can be overcome by applying the strip in a series of straight or substantially straight sections rather than in alternating straight and arcuate sections. Accordingly, it is an object of the present invention to provide a new and improved method and apparatus for continuously storing a strip of material in a coil and incorporating the advantages of the prior cam and cam follower systems, while overcoming the disadvantages thereof. A particular object of the invention is to provide such a method and apparatus which can utilize the cam and cam follower arrangement, the application arm carrying the cam follower and the pusher roller carried on the application arm, with or without the four bar mechanism and with or without the servo mechanism. Another object is to provide such a method and apparatus which can be used with motion picture film and with other strip material.

These and other objects, advantages, features and results will more fully appear in the course of the following description.

In a first aspect, the invention provides an apparatus according to claims 1 and 8. Useful modifications are shown in claims 2 to 7 and 9 to 25. The apparatus according to the invention may also include improved drag means in the form of resistant pads for the odd strip sections and improved skid means incorporating cusp forming edges in the even sections for aid in forming the alternating straight and concave strip sections of the coil. The apparatus may further include means for handling film with sprocket holes using a sprocket drive rotating with the platter for applying the same number of strip sprocket holes to the coil on the platter for each revolution of the platter. In a second aspect, the invention provides a method for storing a coil on a platter according to claim 26.

Useful modifications are shown in claims 27 to 30.

In the present invention, there may be a cam having an even number of track sections joined at curved corners to provide alternating even and odd substantially straight track sections. While the cam track sections preferably are straight, it is not mandatory that they be straight, and the track sections may be slightly concave or slightly convex or a mix of concave and convex, concave and straight or straight and convex, with the motion of the application arm and pusher roller providing the desired alternating straight and concave strip sections of the formed coil.

In a preferred embodiment of the invention, the friction or drag pad at the odd strip sections is a two-level structure with the outer edge of the upper level being straight to help shape the straight portion of the coil of film. Also, the skid at the even sections has an upturned inner edge of a convex configuration so that the even portion of the strip is gathered at the upturned edge and released onto the platter in the desired concave configuration.

### BRIEF DESCRIPTION OF THE DRAWINGS

Fig. 1 is a side view of a film winding machine incorporating an embodiment of the present invention on the center of the three turntables;
Fig. 2 is a top view of the center turntable of the apparatus of Fig. 1, with a motion picture film projector indicated diagramatically;
Fig. 3 is an enlarged view of the film application arm of the apparatus of Fig. 2;
Fig. 3A is a partial view taken along the line 3A-3A of Fig. 4, showing the drive for the sprocket 89 of Fig. 3;
Fig. 4 is an enlarged sectional view taken along the line 6-6 of Fig. 2, with the platter rotated 60 degrees from the position of Fig. 2;
Fig. 5 is a view similar to that of Fig. 2, with the major portion of the coil omitted in order to show the platter surface;
Fig. 6 is an enlarged partial sectional view taken along the line 6-6 of Fig. 2;
Fig. 7 is a perspective view showing a portion of the structure for the roller support arm 86 of Fig. 3;
Fig. 8 is an enlarged partial sectional view taken along the line 8-8 of Fig. 3;
Fig. 9 is a view similar to that of Fig. 3 showing an alternative embodiment incorporating the four bar mechanism; and
Fig. 10 is a view similar to that of Fig. 3 showing an alternative embodiment omitting the servo.

### DESCRIPTION OF THE PREFERRED EMBODIMENTS

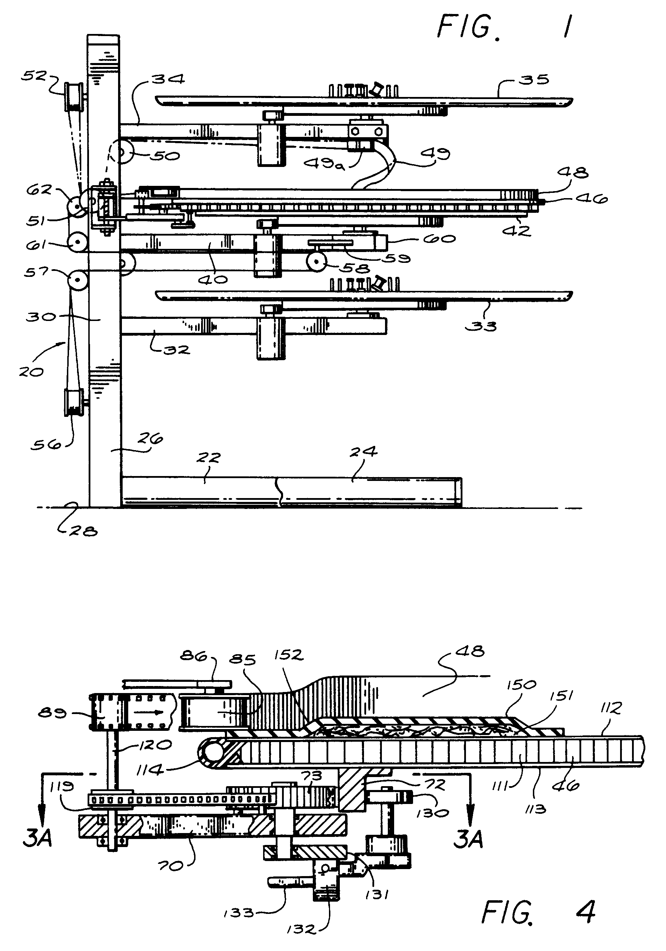

In the drawings, Fig. 1 shows a film winding machine of generally conventional construction, modified to embody a system of the present invention. The machine includes a rigid support structure indicated generally at 20 including a pair of lower support legs 22, 24 forming a V with the vertex 26 at the left, resting on the floor 28. From the vertex 26 an upright post 30 extends upwardly. Support arms 32 and 34 are fixed to post 30 and project horizontally, each supporting a rotatable turntable 33 and 35, respectively, on which a coil of film is stored on edge.

A third support arm 40 extends horizontally between the other arms and carries a rotatable turntable 42. Attached to the upper side of turntable 42 is a platter indicated generally at 46 on which a quantity of film indicated generally at 48 is supported on its edge. The film path during operation includes an upwardly inclined exiting film portion 49 extending from the center of the platter through a take-off roller assembly 49a to a guide roller 50 mounted on the post 30.

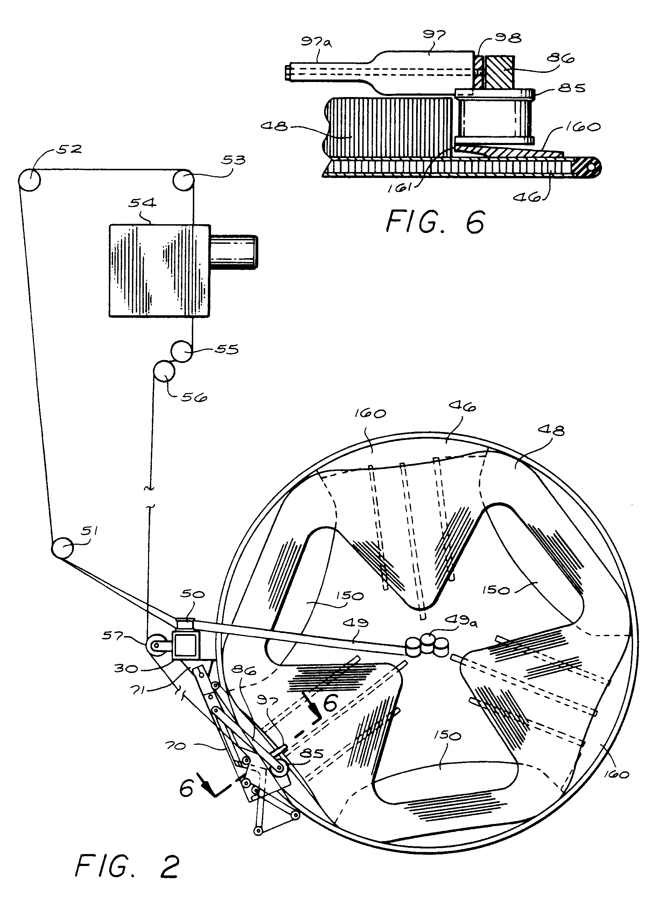

Fig. 2 shows the exiting film portion 49 passing over guide roller 50, and as diagrammatically shown, over guide rollers 51, 52 and 53 to a film projector 54. The film return path from the projector passes over guide rollers 55, 56, 57 and 58, the latter roller being carried at the outer end of a speed control arm 59 of a speed control means 60 which controls the speed of rotation of the turntable. See Fig. 1. The control arm is biased in order to maintain a desired tension on the film entering and exiting the guide roller 58, and the speed control means may be one of those presently in use on endless loop film handling systems.

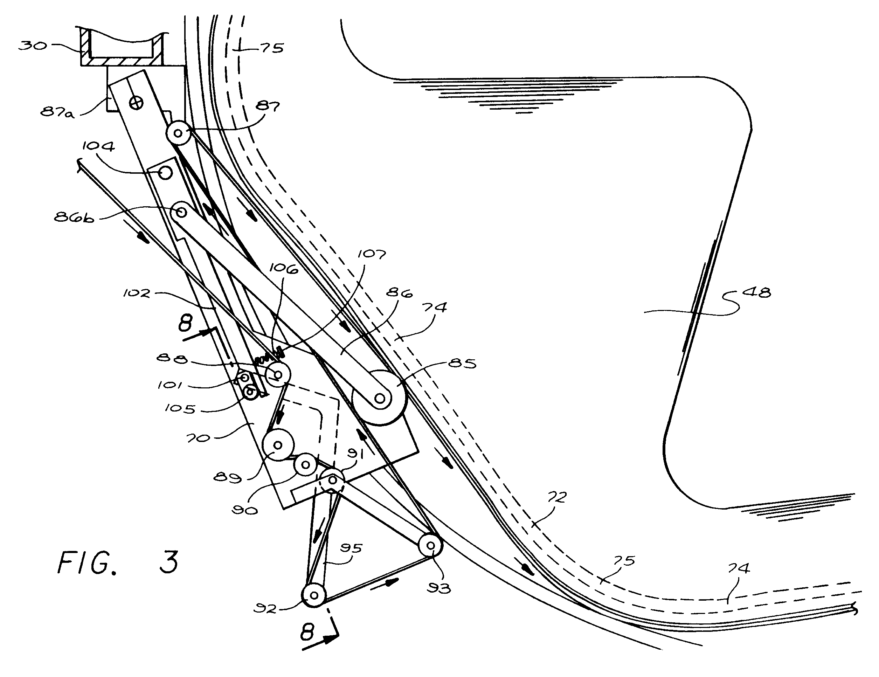

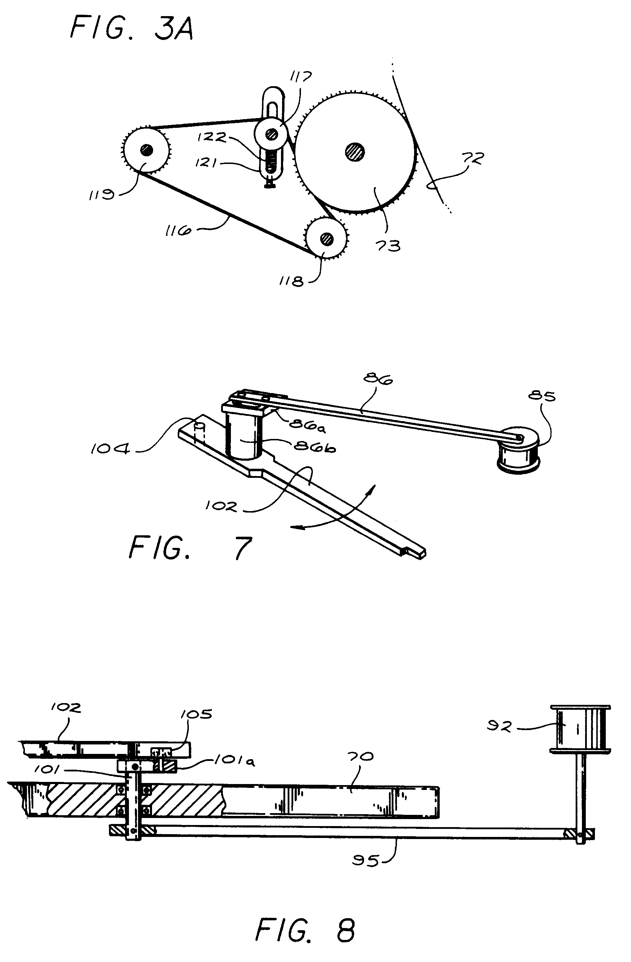

The film moves onto a film application arm 70 via guide rollers 61, 62, which arm 70 is pivotally mounted on the post 30 at a bracket 71. The configuration of the arm 70 will be described in greater detail in conjunction with Fig. 3.

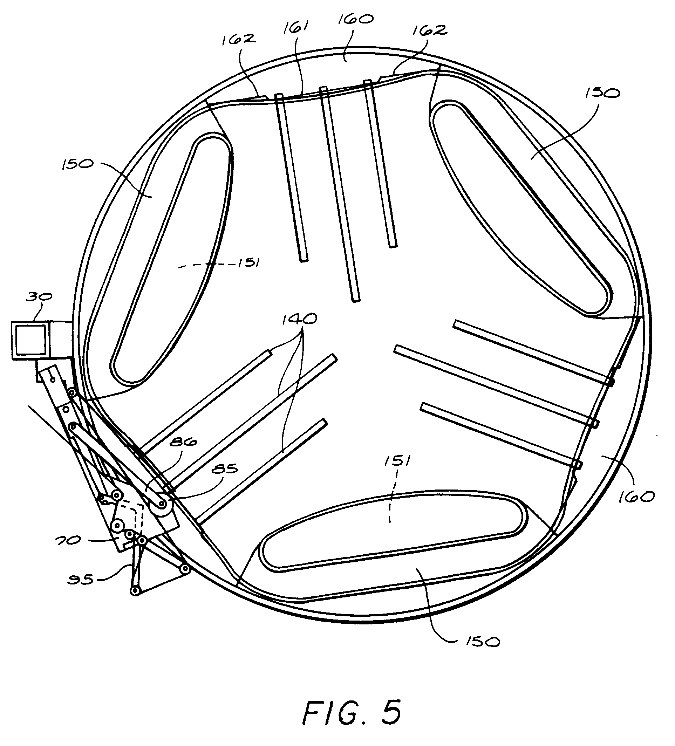

A cam track 72 is carried on the underside of the platter 46, and preferably comprises a strip with gear teeth along the edge, for engagement by a cam follower 73 having mating teeth (Fig. 4). The cam track 72 is shaped in an even number of substantially straight sections 74 which are joined at curved corners 75, providing alternating even and odd cam track sections. In the embodiment illustrated, six cam track sections are utilized, as seen in Figs. 2 and 3, where the cam track in Fig. 2 has the shape of the outer periphery of the coil 48. In operation, the incoming strip portion of the film is applied at the periphery of the coil in an even number of substantially straight strip sections joined at curved corners, and the cam track functions in conjunction with the film application arm and its components to achieve this desired shape. After the incoming strip is applied, alternating sections, such as the even sections, are formed into concave sections by a pusher roller, with the odd sections being left straight. One significant advantage of this arrangement is that the straight sections are maintained under a slight amount of tension between the curved corners so that the strip resists the tendency to curl, while the now concave sections also resist the tendency to curl because of the concave configuration.

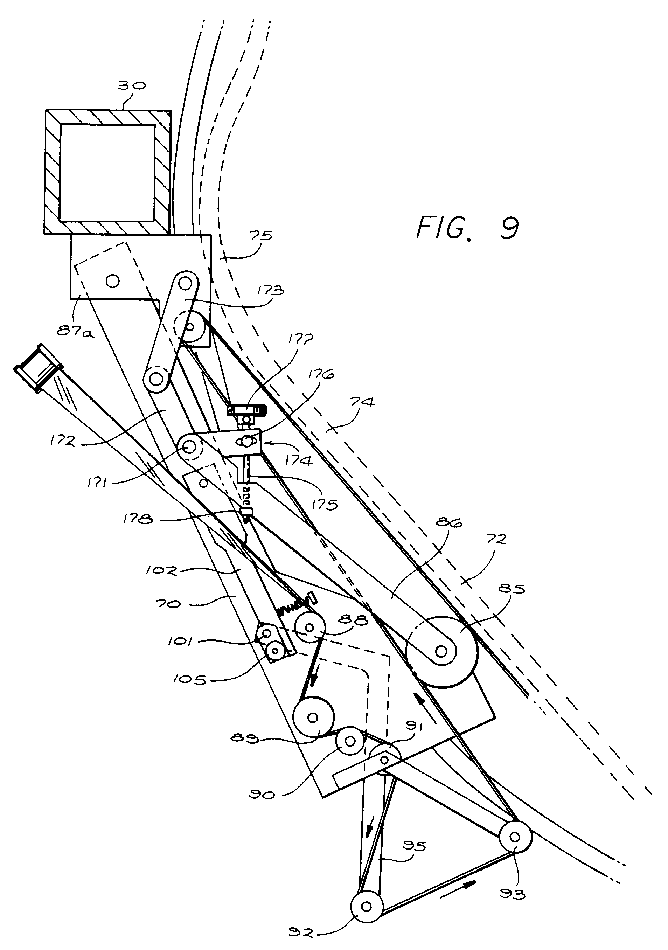

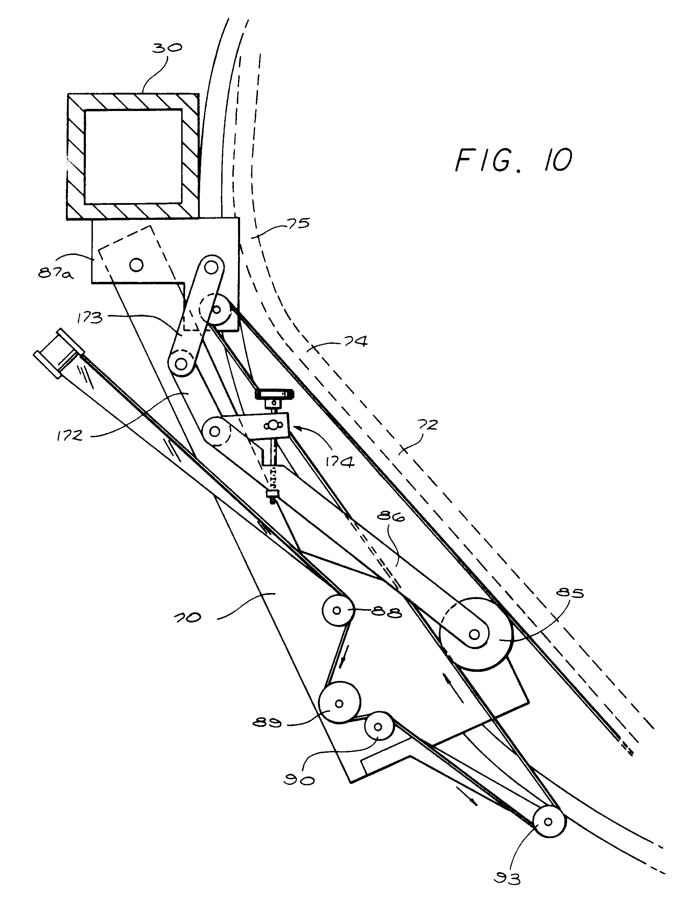

While the cam track sections are referred to as being substantially straight, it should be understood that they do not have to be absolutely straight between the curved corners. The track sections can have alternating straight and concave configurations as shown in Fig. 3, can have alternating convex and straight sections as shown in Fig. 9, and can have all straight sections as shown in Fig. 10, while still obtaining the desired end result.

A pusher roller 85 is carried on an arm 86 which is pivotally mounted on the application arm 70, in a manner to be described. With this arrangement, the pusher roller can be in contact with the outer layer of film on the coil 48 during the entire revolution of the platter. A film application roller 87 is mounted on a plate 87a carried on the post 30, and positioned so that preferably the roller 87 does not contact the coiled film 48. The film coming from the projector passes over the roller 62, around a roller 88 and a sprocket 89, past a conventional failsafe roller 90, another roller 91 and a tensioning roller 92, and a roller 93 leading to the application roller 87. The tensioning roller 92 is carried on an arm 95 pivotally mounted on the arm 70, with a spring providing the desired film tension at the application roller.

In the preferred embodiment, a roller 97 is carried in the horizontal position on an arm 98 in turn attached to the arm 86. The operation of the roller 97 is best illustrated in Fig. 6, with the roller being positioned to overlay the film coil 48 and urge the successive layers of the coil downward into contact with the platter to provide a uniform coil. The inner end 97a of the roller 97 is of a lesser diameter to accomodate the rise produced by pad 151, as shown in Fig. 4.

An arrangement for monitoring the amount of film being taken up on the platter during each revolution is incorporated. The arm 95 serves as a tension arm and is pivotally mounted on the arm 70 at a pivot pin 101, with the roller 92 rotatably mounted at the outer end thereof. The pusher roller 85 is carried on the pusher arm 86 which is pivotally mounted on a lever 102 at a post 86b with an adjustment plate 86a which permits adjustment of the angle between the arms 86 and 102. See Fig. 7. The lever 102 is pivotally mounted on the arm 70 at a pivot pin 104, with the other end of the lever 102 engaging a roller 105 carried on an arm 101a on the pin 101. The lever 102 is urged against the roller 105 by a compression spring 106 positioned between the lever 102 and a mounting bracket 107 carried on the arm 70. See Figs. 3 and 8. The spring 106 could in an alternative arrangement be positioned under the roller 88.

The tension arm 95 is shown in the film loose position in Fig. 3, and moves counter-clockwise toward a film tight position. The spring 106 urges the tension arm to the loose film position. When the tension arm rotates counter-clockwise, engagement of the roller 105 with the end of the lever 102 causes the lever to rotate counter-clockwise and move the pivot point of the pusher arm 86 at pin 103 inward toward the center of the film coil.

This arrangement provides a feedback type of operation for monitoring the amount of film being taken up on the platter as the platter rotates. It has been determined that the length of film per sprocket hole can vary from one film to another, can vary along a length of film, and can vary with variations in environmental conditions. Therefore it is desirable to provide an automatic control for the amount of film being wound onto the platter per revolution. In the present arrangement, this is carried out by determining the amount of slack in the film accumulated by the tension arm as the angular position of the tension arm changes. This is used for positioning the pusher roller 85 in a manner to change the circumference of the film being laid onto the platter. The pusher roller position adjusts automatically with the change in position of the tension arm so that the outer circumference of the coil of film on the platter will equal the length of film being metered onto the platter with each revolution of the platter.

Loose film or slack in the film between the sprocket 89 and the platter will permit the tension arm to rotate clockwise away from the platter under the action of the spring 96. The linkage between the tension arm and the pusher roller moves the pusher roller outward away from the center of the platter and effectively increases the radius of the position of film being laid down on the platter. Conversely, tightening of the film will rotate the tension arm counter-clockwise and thereby move the pusher roller inward toward the center of the platter with the result that the film is applied onto the platter at a shorter radius.

The platter 46 is made circular, and typically is formed of a honeycomb core 111 with upper and lower skins 112, 113 respectively, as best seen in Fig. 4. A compressable extrusion 114 is inserted in the outer edge between the upper and lower skins, to serve as an end cap and protective rim.

The gear belt cam 72 is cemented to the bottom of the platter 46, directly or with an intermediate support member, with the substantially straight sections joined at corners. The cam follower gear 73 journaled in the arm 70 engages the gear belt 72 and drives a sprocket drive belt 116. The belt 116 is maintained in engagement with the gear 73 by rollers 117, 118 and drives a sprocket 119 on shaft 120 which also carries the sprocket 89 which serves as the metering sprocket for film advance. Tension from the belt 116 is provided by the roller 117 mounted in a slot in an arm 121, and urged outward by a spring 122. See Fig. 3A.

If desired, a follower roller 130 may be carried on an arm 131 which swivels on the arm 70, with the follower roller 130 engaging the inner side of the gear belt 72 for maintaining the gear 73 and gear belt in engagement. Preferably the follower roller 130 is mounted on a release linkage 132 which is actuated by lever 133 to provide for disengagement of the drive gear and gear belt.

As best seen in Fig. 5, one or more elongated skid strips 140 may be provided on the upper surface of the platter to assist the portions of film forming the cusps to move smoothly toward the center of the platter during operation. The skid strips may be made of teflon or similar material of low friction, which provides a skid surface for the lower edge of the film as each layer moves inwardly during operation.

Friction pads 150 are positioned on the platter to provide a continuous resistance surface at the odd sections for aid in coil shape formation. These continuous pads provide improved control of the film and positive loop formation with substantially all types of film and film conditions. The pads 150 could extend substantially to the center of the platter, but are not of as great importance at the inner portions of the platter. Hence the preferred configuration is to have the continuous pads 150 extend from the periphery inward for about 1/3 of the radius. These pads are made of a material having a relatively high coefficient of friction, such as rubber.

A filler pad 151 is positioned under a portion of each pad 150, with the outer periphery of the filler pad having a straight or substantially straight edge corresponding to the desired shape of the coil 48. Each filler pad provides a straight ramp or cliff 152 in the friction pad 150 which functions to maintain the film in the desired straight configuration as the inwardly moving film is moved upward over the transition, as seen in Fig. 4.

Skid ramps 160 are mounted on the platter 46 at the even sections to aid in the cusp formation. The ramps may be made of the same material as the strips 140. Each of the skid ramps 160 has an outer curve preferably corresponding to the periphery of the platter, and an inner edge of special design. Referring particularly to Figs. 5 and 6, the inner edge 161 of the skid ramp 160 is raised, and has a convex shape, corresponding to the desired convex shape of the periphery of the coil at the even sections. Preferably, the ends 162 of the inner edge 161 are relieved so that there is no raised portion at each end. With this configuration, the film slides readily over the ends, while the raised center portion provides some resistance to inward film movement. Then as a strip of the film drops over the raised inner edge, the strip has the desired initial cusp or concave configuration.

In operation, the outer layer of film laid down by the application roller 87 is pushed radially inward by the pusher roller 85 at the even sections, while remaining straight at the odd sections. The film slides along tho skid ramp 160 and after a number of layers of film have been applied, the initial layer moves over the inner edge of the skid ramp and drops down onto the platter and skid strips. The film at this point is formed into the desired cusp shape as defined by the inner edge of the skid ramp. The film in the odd section rests on the friction pads 150 and as the layers move inward, the film encounters the straight leading edge of the ramp 152 (Fig. 4), maintaining the desired straight section of the coil. While only a few film layers are shown in Fig. 5 for purposes of clarity, it should be understood that there actually will be a plurality of layers of film on the platter, as shown in Figs. 2 and 3.

In operation, the arm 70 is moved toward and away from the center of the platter as the platter rotates, by engagement of the gear 73 with the gear belt 72. The pusher roller 85 is similarly moved in and out, and maintains substantially continuous contact with the outer layer of film, pushing the film inward in the even sections to the desired concave configuration.

In this preferred embodiment the cam track has alternating straight and concave sections, and the roller 85 follows the cam track to produce the same shape in the film coil.

The length of film applied per revolution of the platter should be the same as that removed from the center of the coil. With some film this can be accomplished by the sprocket metering as described above. However in many instances, sprocket metering is not sufficiently accurate. The feedback system using the tension arm 95 provides a more accurate arrangement for controlling the amount of film applied per platter revolution, and may be used with or without sprocket metering. At the present time the combinaton of sprocket metering and feedback control is preferred.

An alternative embodiment is shown in Fig. 9 using a mechanism for adjusting the movement of the pusher roller 85 with respect to the movement of the application arm 70. The arm 86 is pivotally mounted on a post 171 carried on the arm 70. A crank arm 172 is also pivotally mounted on the post 171, with one arm of the crank arm 172 connected to the plate 87a by a link 173, and with the other arm of the crank arm connected to the arm 86 by an adjustment mechanism 174. The adjustment mechanism 174 provides for adjusting the angular relation between the arm 86 and the crank arm 172, and typically comprises a shaft 175 riding in a collar 176 carried on the crank arm 172 and threaded into the arm 86. Rotation of the shaft 175 by the knob 177 moves the arm 86 with respect to the crank arm, and a nut 178 serves to lock the adjustment mechanism in the set position.

The arm 86 which carries the pusher roller 85 is actuated by a linkage comprising the arm 70, the plate 87a, the link 173, and the crank arm 172. With this linkage arrangement, as the arm 70 moves inward a particular amount, the linkage causes the arm 86 to move inward by a greater amount, thereby improving the formation of the cusp. The position of the roller 85 with respect to the arm 70 may be adjusted by means of the adjustment mechanism 174.

While the servo mechanism using the tension arm 95 is preferred, the apparatus may also be utilized without the servo mechanism while providing the desired application of the incoming strip portion to the periphery of the coil in the substantially straight strip section joined at curved corners, and such an embodiment is shown in Fig. 10.

## Claims

1. An apparatus for continuously storing a strip of material in a coil (48), including a flat platter (46) and drive means for rotating said platter (46), the coil (48) lying edgewise on said platter (46) and the strip including an incoming strip portion leading to the coil periphery and an outgoing strip portion leading from the coil center,
means (87) for applying the incoming strip portion to the periphery of the coil (48) of the strip on said platter (46) as said platter (46) rotates, characterized in that the said means (87) apply the strip in an even number of substantially straight strip sections joined at curved corners providing alternating even and odd straight strip sections; and there are
means (85) for continuously applying an inward pressure to said even strip sections to form said even strip sections into concave strip sections, said odd strip sections remaining substantially straight.

2. An apparatus according to claim 1 including resistance means (150) positioned on said platter at said odd strip sections for engaging the strip edge and resisting movement of the strip toward the coil center.

3. An apparatus according to claim 2 wherein said resistance means (150) has a friction producing surface with a lower level and a higher level with an inclined surface (152) between said levels and with the outer edge of said higher level being substantially straight.

4. An apparatus according to any one of the preceding claims including skid means (160) positioned on said platter at said even strip sections for engaging the strip edge and enhancing movement of the strip toward the coil center, said skid means (160) having a convex inner edge (161) with an upward turned lip.

5. An apparatus according to any one of claims 1 to 4 including skid means (160) positioned on said platter (46) at said even strip sections for engaging the strip edge and enhancing movement of the strip toward the coil center, said skid means (160) having an inner edge (161) with a projecting convex central section between end sections, with said central section having an upward turned lip.

6. An apparatus according to any one of the preceding claims wherein the strip has sprocket holes along its length and said means for applying includes a sprocket (89) for engaging said incoming strip portion sprocket holes, and
the apparatus includes means (116,120) for driving said sprocket (89) as said platter (46) rotates so as to apply the same number of strip sprocket holes to said coil (48) for each revolution of said platter (46).

7. An apparatus according to any one of the preceding claims wherein said means (87) for applying the incoming strip portion includes a strip application controller comprising:
a tension arm (95) pivotally mounted on said means (87) for applying the incoming strip portion for movement between strip loose and strip tight positions;
a tension roller (92) carried on said tension arm (95);
spring means (106) for urging said tension arm (95) toward said strip loose position;
strip guide means (88,89,90,91) for guiding the incoming strip around the tension roller (92) upstream of that roller (92) and a pusher arm (86) with a pusher roller (85) carried thereon;
a tension arm lever (102) mounted on said means (87) for applying and engaging said tension arm (95) for movement with said tension arm (95); and
means (86a,86b) for mounting said pusher arm (86) on said tension arm lever (102).

8. An apparatus for continuously storing a strip of material in a coil (48), the apparatus including a flat platter (46) and drive means for rotating said platter (46), the coil (48) lying edgewise on the platter (46) and the strip including an incoming strip portion leading to the coil (48) periphery and an outgoing strip portion leading from the coil (48) center, characterized by
a cam mounted for rotation with said platter (46) about its center, said cam having a cam track (72) with an even number of substantially straight track sections joined at curved corners providing alternating even and odd cam track sections;
means for applying the incoming strip portion to the periphery of the coil (48) of the strip on said platter (46) as said platter (46) rotates, in an even number of substantially straight strip sections providing alternating even and odd strip sections, said means for applying including
a cam follower (73) for engaging said cam track (72) with said means for applying moving toward and away from said center as said platter (46) rotates and varying the distance from said center to the point of application of the incoming strip portion,
a roller (87) for guiding the incoming strip onto said coil (48), and
a second roller (85) for engaging said coil (48) at the outer periphery thereof at said even strip sections for urging only said even strip sections of said coil (48) inward toward said center in a concave shape while maintaining tension in said strip at said odd strip sections for urging said coil inward toward said center in a substantially straight shape.

9. An apparatus according to claim 8 wherein said cam follower (73) includes a first gear and said cam track (72) includes a second gear, with said first and second gears engaging each other for driving said first gear as a function of rotation of said platter (46).

10. An apparatus according to claim 8 or claim 9 wherein said second roller (85) is positioned on said means for applying for continuously engaging said coil (48) as it rotates.

11. An apparatus according to any one of claims 8 to 10 wherein the periphery of said second roller (85) is at a lesser distance from said center than the periphery of said first roller (97) for spacing said first roller (97) from said coil (48).

12. An apparatus according to any one of claims 8 to 11 wherein said means for applying includes a support arm (70) pivoted for movement in a horizontal plane, and a pusher arm (86) with said second roller (85) carried thereon, with said pusher arm (86) pivoting on said support arm (70).

13. An apparatus according to any one of claims 8 to 12 wherein said means for applying includes:
a film drive sprocket (89);
a spring loaded tensioning roller (92);
an endless drive belt (116); and
means (117,118) for positioning said drive belt (116) for engaging said cam follower (73) and said sprocket (89), with the strip of material moving around said sprocket (89) past said tensioning roller (92) and said first roller (93) onto said coil (48).

14. An apparatus according to claim 8 wherein said means for applying includes a four link movement comprising:
a first arm (70) as the first link, with said cam follower (73) mounted thereon;
a second arm (86) as the second link and pivotally mounted on said first arm (70) at an intermediate point of said second arm (86), with said second roller (85) mounted thereon and with said first roller means (87) mounted thereon;
a bracket (87a) as the third link, with said first arm (70) pivotally mounted thereon; and
a link member (173) as the fourth link and connected between said bracket (87a) and said second arm (86).

15. An apparatus according to claim 14 comprising a crank arm (172) pivotally mounted at said intermediate point, and including means for adjustably fixing the angle between said two arms.

16. An apparatus according to claim 8 wherein said means for applying includes a support arm (70) pivoted for movement in a horizontal plane, with said second roller (85) mounted thereon.

17. An apparatus according to any one of claims 8 to 16 wherein said means for applying includes a strip application controller comprising:
a tension arm (95) pivotally mounted on said means for applying for movement between strip loose and strip tight positions;
a tension roller (92) carried on said tension arm (95);
spring means (106) carried on said means for applying for urging said tension arm (95) toward said strip loose position; and
strip guide means (91) for guiding the incoming strip around said tension roller (92) upstream of that first roller (92);
a pusher arm (86) with said second roller (85) carried thereon;
a tension arm lever (102) mounted on said means for applying and engaging said tension arm (95) for movement with said tension arm (95); and
means (86a,86b) for mounting said pusher arm (86) on said tension arm lever (102).

18. An apparatus according to any one of claims 8 to 17 wherein said even cam track sections are slightly concave and said odd cam track sections are straight.

19. An apparatus according to any one of claims 8 to 16 wherein said even cam track sections are straight and said odd cam track sections are slightly convex.

20. An apparatus according to any one of claims 8 to 16 wherein both said even and odd cam track sections are straight.

21. An apparatus according to claim 8 wherein the strip has sprocket holes alongs its length and said means for applying includes a sprocket (89) for engaging said incoming strip portion sprocket holes, and
including means (116,120) for driving said sprocket (89) as said platter (46) rotates for applying the same number of strip sprocket holes to said coil (48) for each revolution of said platter (46).

22. An apparatus according to any one of claims 8 to 21 including resistance means (150) positioned on said platter (46) at said odd strip sections for engaging the strip edge and resisting movement of the strip toward the coil center.

23. An apparatus according to claim 22 wherein said resistance means (150) has a friction producing surface with a lower level and a higher level with an inclined surface (152) between said levels and with the outer edge of said higher level being substantially straight.

24. An apparatus according to any one of claims 8 to 23 including skid means (160) positioned on said platter (46) at said even strip sections for engaging the strip edge and enhancing movement of the strip toward the coil center, said skid means (160) having a convex inner edge (161) with an upward turned lip.

25. An apparatus according to any one of claims 8 to 23 including skid means (160) positioned on said platter (46) at said even strip sections for engaging the strip edge and enhancing movement of the strip toward the coil center, said skid means (160) having an inner edge (161) with a projecting convex central section between end sections, with said central section having an upward turned lip.

26. A method of continuously storing a strip of material in a coil (48) on a flat platter (46) having drive means for rotating the platter (46), with the coil (48) lying edgewise on the platter (46) and the strip having an incoming strip portion leading to the coil periphery and an outgoing strip portion leading from the coil center, by
applying the incoming strip portion to the periphery of the coil (48) of the strip on the platter (46) as the platter (46) rotates, characterized by having alternating straight and concave segments on the platter, by applying the incoming strip portion in an even number of substantially straight strip sections joined at curved corners providing alternating even and odd strip sections and also characterized by applying an inward pressure to the even strip sections to form only the even strip sections into concave strip sections and applying an inward pressure to the odd strip sections to maintain only the odd strip sections in the substantially straight strip sections.

27. The method according to claim 26 including the step of applying a drag force to the odd strip sections at a strip edge for resisting movement of the strip toward the center of the coil (48).

28. The method according to claim 26 or claim 27 including the step of applying a restraining force to the even strip sections at a strip edge in a concave curve as the strip moves inward toward the center of the coil (48), and releasing the force at substantially the same time along the curved edge.

29. The method according to any one of claims 26 to 28 wherein the strip has sprocket holes along its length, and
including the step of driving the strip with a sprocket as the platter rotates to apply the same number of strip sprocket holes to the coil (48) for each revolution of the platter (46).

30. The method according to any one of claims 26 to 29 including the steps of:
removing the outgoing strip portion from the center of the coil (48); and
applying to the periphery of the coil (48) per revolution of the platter (46), an incoming strip portion of the same length as that removed from the center of the coil (48);
continuously contacting the coil (48) with a pusher roller (85) as the coil rotates; and
automatically adjusting the pusher roller (85) position so that the outer circumference of the coil (48) on the platter (46) will substantially equal the length of strip being removed from the platter with each revolution of the platter.

## Patentansprüche

1. Vorrichtung zum kontinuierlichen Speichern eines Materialstreifens in einer Spule (48), die eine ebene Platte (46) und Antriebsmittel zum Drehen der genannten Platte (46) umfaßt, wobei die Spule (48) Kante an Kante bzw. aufgekantet auf der genannten Platte (46) liegt und der Streifen einen hereinkommenden Streifenabschnitt einschließt, der zur Spulenperipherie führt, sowie einen herauskommenden Streifenabschnitt, der vom Spulenzentrum wegführt,
Mittel (87) zum Aufbringen des hereinkommenden Streifenabschnitts auf die Peripherie der Spule (48) des Streifens auf der genannten Platte (46), während die genannte Platte (46) sich dreht, dadurch gekennzeichnet, daß die genannten Mittel (87) den Streifen in einer geraden Anzahl im wesentlichen geradliniger Streifenabschnitte aufbringen, die an abgerundeten Ecken aneinandergefügt sind, wodurch abwechselnd gerade und ungerade geradlinige Streifenabschnitte geschaffen werden; und dadurch, daß
Mittel (85) zum kontinuierlichen Anwenden eines nach innen gerichteten Drucks auf die genannten geraden Streifenabschnitte vorhanden sind, um aus den genannten geraden Streifenabschnitten konkave Streifenabschnitte zu bilden, wobei die genannten ungeraden Streifenabschnitte im wesentlichen geradlinig bleiben.

2. Vorrichtung nach Anspruch 1, die Widerstandsmittel (150) einschließt, die an den genannten ungeraden Streifenabschnitten auf der genannten Platte angeordnet sind, um an der Streifenkante anzugreifen und der Bewegung des Streifens gegen das Spulenzentrum hin Widerstand zu leisten.

3. Vorrichtung nach Anspruch 2, worin das genannte Widerstandsmittel (150) eine Reibung erzeugende Oberfläche mit einer unteren Fläche bzw. Ebene und einer höheren Fläche bzw. Ebene mit einer geneigten Oberfläche (152) zwischen den genannten Ebenen aufweist, und wobei die äußere Kante der genannten oberen Ebene im wesentlichen geradlinig ist.

4. Vorrichtung nach einem der vorhergehenden Ansprüche, die Gleiteinrichtungen (160) einschließt, die auf der genannten Platte an den genannten geraden Streifenabschnitten angeordnet sind, um an der Streifenkante anzugreifen und die Bewegung des Streifens gegen das Spulenzentrum hin zu verstärken, wobei die genannte Gleiteinrichtung (160) eine konvexe Innenkante (161) mit einer nach oben gedrehten Lippe aufweist.

5. Vorrichtung nach einem der Ansprüche 1 bis 4, die eine Gleiteinrichtung (160) einschließt, die auf der genannten Platte (46) an den genannten geraden Streifenabschnitten angeordnet ist, um an der Streifenkante anzugreifen und die Bewegung des Streifens gegen das Spulenzentrum hin zu verstärken, wobei die genannte Gleiteinrichtung (160) eine Innenkante (161) mit einem vorragenden konvexen mittleren Abschnitt zwischen Endabschnitten aufweist, wobei der genannte mittlere Abschnitt eine nach oben gedrehte Lippe aufweist.

6. Vorrichtung nach einem der vorhergehenden Ansprüche, worin der Streifen Zahnrollenlöcher entlang seiner Länge aufweist und das genannte Mittel zum Aufbringen eine Zahnrolle (89) zum Eingreifen in die genannten hereinkommenden Streifenabschnittszahnrollenlöcher einschließt, und
die Vorrichtung Mittel (116, 120) zum Antreiben der genannten Zahnrolle (89) einschließt, wenn die genannte Platte (46) sich dreht, sodaß für jede Umdrehung der genannten Platte (46) die gleiche Anzahl an Streifenzahnrollenlöchern aufgebracht wird.

7. Vorrichtung nach einem der vorhergehenden Ansprüche, worin das genannte Mittel (87) zum Aufbringen des hereinkommenden Streifenabschnitts einen Streifenaufbringregler einschließt, umfassend:
einen Spannarm (95) zur Bewegung zwischen einer Position, in welcher der Streifen locker ist, und einer Position, in welcher der Streifen straff ist, welcher Arm schwenkbar am genannten Mittel (87) montiert ist, um den hereinkommenden Streifenabschnitt anzulegen;
eine Spannwalze (92), die auf dem genannten Spannarm (95) getragen wird;
Federmittel (106), um den genannten Spannarm (95) gegen die genannte lockere Streifenposition hin zu drängen;
Streifenführungsmittel (88, 89, 90, 91) zum Leiten des hereinkommenden Streifens um die Spannwalze (92) stromaufwärts dieser Walze (92) und einen Druckarm (86) mit einer darauf getragenen Druckwalze (85);
einen Spannarmhebel (102), der auf dem genannten Mittel (87) montiert ist, um den genannten Spannarm (95) anzulegen und an ihm anzugreifen zur Bewegung mit dem genannten Spannarm (95); und
Mittel (86a, 86b) zum Montieren des genannten Druckarms (86) auf dem genannten Spannarmhebel (102).

8. Vorrichtung zum kontinuierlichen Speichern eines Materialstreifens in einer Spule (48), wobei die Vorrichtung eine ebene Platte (46) und Antriebsmittel zum Drehen der genannten Platte (46) umfaßt, wobei die Spule (48) Kante an Kante auf der Platte (46) liegt und der Streifen einen hereinkommenden Streifenabschnitt, der zur Spulen(48)peripherie führt, und einen herauskommenden Streifenabschnitt umfaßt, der vom Zentrum der Spule (48) wegführt, gekennzeichnet durch
eine Nocke, die zur Drehung mit der genannte Platte (46) um ihr Zentrum montiert ist, wobei die genannte Nocke eine Nockenspur (72) mit einer geraden Anzahl an im wesentlichen geradlinigen Spurabschnitten aufweist, die an abgerundeten Ecken aneinandergefügt bzw. verbunden sind, wodurch abwechselnd gerade und ungerade Nockenspurabschnitte geschaffen werden;
Mittel zum Aufbringen des hereinkommenden Streifenabschnitts auf die Peripherie der Spule (48) aus dem Streifen auf der genannten Platte (46), wenn sich die genannte Platte (46) dreht, in einer geraden Anzahl von im wesentlichen geradlinigen Streifenabschnitten, wodurch abwechselnde gerade und ungerade Streifenabschnitte geschaffen werden, wobei das genannte Mittel zum Aufbringen umfaßt
einen Nockenstößel bzw. ein Nockenzahnrad (73) zum Eingreifen in die bzw. Angreifen an der genannte(n) Nockenspur (72), wobei sich das genannte Mittel zum Aufbringen gegen das genannte Zentrum hin und von diesem weg bewegt, wenn die genannte Platte (46) sich dreht, und Verändern des Abstands vom genannten Zentrum zum Punkt des Aufbringens des hereinkommenden Streifenabschnitts,
eine Walze (87), um den hereinkommenden Streifen auf die genannte Spule (48) zu führen, und
eine zweite Walze (85) zum Eingreifen in die bzw. Angreifen an der genannte(n) Spule (48) an deren äußerer Peripherie an den genannten geraden Streifenabschnitten, um nur die genannten geraden Streifenabschnitte der genannten Spule (48) gegen das genannte Zentrum in einer konkaven Form nach innen zu drängen, wahrend Spannung im genannten Streifen an den genannten ungeraden Streifenabschnitten beibehalten wird, um die genannte Spule in einer im wesentlichen geradlinigen Form gegen das genannte Zentrum hin nach innen zu drängen.

9. Vorrichtung nach Anspruch 8, worin der genannte Nockenstößel bzw. das genannte Nockenzahnrad (73) ein erstes Zahnrad einschließt und die genannte Nockenspur (72) ein zweites Zahnrad einschließt, wobei das genannte erste und zweite Zahnrad ineinandergreifen, um das genannte erste Zahnrad als Funktion der Drehung der genannten Platte (46) anzutreiben.

10. Vorrichtung nach Anspruch 8 oder 9, worin die genannte zweite Walze (85) auf dem genannten Mittel zum Aufbringen angeordnet ist, um kontinuierlich in die genannte Spule (48) einzugreifen bzw. an dieser anzugreifen, während sie sich dreht.

11. Vorrichtung nach einem der Ansprüche 8 bis 10, worin die Peripherie der genannten zweiten Walze (85) sich in einem geringeren Abstand vom genannten Zentrum befindet als die Peripherie der genannten ersten Walze (97), um die genannte erste Walze (97) im Abstand von der genannten Spule (48) anzuordnen.

12. Vorrichtung nach einem der Ansprüche 8 bis 11, worin das genannte Mittel zum Aufbringen einen Stützarm (70), der zur Bewegung in einer horizontalen Ebene schwenkbar ist, und einen Druckarm (86) umfaßt, wobei die genannte zweite Walze (85) darauf getragen wird, wobei der genannte Druckarm (86) auf dem genannten Stützarm (70) schwenkbar ist.

13. Vorrichtung nach einem der Ansprüche 8 bis 12, worin das genannte Mittel zum Aufbringen einschließt:
eine Filmantriebszahnrolle (89);
eine Spannwalze (92) unter Federbelastung;
einen Endlosantriebsriemen (116); und
Mittel (117, 118) zum Anordnen des genannten Antriebsriemens (116) zum Eingreifen in das genannte Nockenzahnrad (73) und die genannte Zahnrolle (89), wobei der Materialstreifen sich um die genannte Zahnrolle (89) herum an der genannten Spannwalze (92) und der genannten ersten Walze (93) vorbei auf die genannte Spule (48) bewegt.

14. Vorrichtung nach Anspruch 8, worin das genannte Mittel zum Aufbringen ein Gelenkviereck einschließt, welches umfaßt:
einen ersten Arm (70) als das erste Gelenk, wobei das genannte Nockenzahnrad (73) daran montiert ist;
einen zweiten Arm (86) als das zweite Gelenk, der an einem Zwischenpunkt des genannten zweiten Arms (86) schwenkbar am genannten ersten Arm (70) montiert ist, wobei die genannte zweite Walze (85) darauf montiert ist und wobei das genannte erste Walzenmittel (87) daran montiert ist;
eine Klammer (87a) als das dritte Gelenk, wobei der genannte erste Arm (70) schwenkbar darauf montiert ist; und
ein Gelenkelement (173) als das vierte Gelenk, das zwischen der genannten Klammer (87a) und dem genannten zweiten Arm (86) angeschlossen ist.

15. Vorrichtung nach Anspruch 14, die einen Kurbelarm (172) umfaßt, der schwenkbar am genannten Zwischenpunkt montiert ist und Mittel zum einstellbaren Befestigen des Winkels zwischen den genannten beiden Armen einschließt.

16. Vorrichtung nach Anspruch 8, worin das genannte Mittel zum Aufbringen einen Stützarm (70) einschließt, der zur Bewegung in einer horizontalen Ebene angelenkt ist, wobei die genannte zweite Walze (85) daran montiert ist.

17. Vorrichtung nach einem der Ansprüche 8 bis 16, worin das genannte Mittel zum Aufbringen einen Streifenaufbringungsregler einschließt, der umfaßt:
einen Spannarm (95), der zur Bewegung zwischen lockeren Streifenpositionen und straffen Streifenpositionen schwenkbar am genannten Mittel zum Aufbringen montiert ist;
eine Spannwalze (92), die auf dem genannten Spannarm (95) getragen wird;
Federmittel (106), die auf dem genannten Mittel zum Aufbringen getragen werden, um den genannten Spannarm (95) gegen die genannte lockere Streifenposition hin zu drängen; und
Streifenführungsmittel (91), um den hereinkommenden Streifen um die genannte Spannwalze (92) stromaufwärts von jener ersten Walze (92) zu führen;
einen Druckarm (86), wobei die genannte zweite Walze (85) darauf getragen wird;
einen Spannarmhebel (102), der auf dem genannten Mittel zum Aufbringen montiert ist und zur Bewegung mit dem genannten Spannarm (95) in den genannten Spannarm (95) eingreift bzw. an diesem angreift; und
Mittel (86a, 86b) zum Montieren des genannten Druckarms (86) auf dem genannten Spannarmhebel (102).

18. Vorrichtung nach einem der Ansprüche 8 bis 17, worin die genannten geraden Nockenspurabschnitte leicht konkav sind und die genannten ungeraden Nockenspurabschnitte geradlinig sind.

19. Vorrichtung nach einem der Ansprüche 8 bis 16, worin die genannten geraden Nockenspurabschnitte geradlinig sind und die genannten ungeraden Nockenspurabschnitte leicht konvex sind.

20. Vorrichtung nach einem der Ansprüche 8 bis 16, worin beide der genannten geraden und ungeraden Nockenspurabschnitte geradlinig sind.

21. Vorrichtung nach Anspruch 8, worin der Streifen Zahnrollenlöcher entlang seiner Länge aufweist und das genannte Mittel zum Aufbringen eine Zahnrolle (89) aufweist, um in die genannten Zahnrollenlöcher des hereinkommenden Streifenabschnitts einzugreifen, und
die Mittel (116, 120) zum Antreiben der genannten Zahnrolle (89) einschließt, während die genannte Platte (46) sich dreht, um bei jeder Umdrehung der genannten Platte (46) die gleiche Anzahl an Streifenzahnrollenlöcher auf die genannte Spule (48) aufzubringen.

22. Vorrichtung nach einem der Ansprüche 8 bis 21, die ein Widerstandsmittel (150) einschließt, das auf der genannten Platte (46) an den genannten ungeraden Streifenabschnitten angeordnet ist, um an dem Streifenrand anzugreifen, und das der Bewegung des Streifens gegen das Spulenzentrum hin Widerstand leistet.

23. Vorrichtung nach Anspruch 22, worin das genannte Widerstandsmittel (150) eine Reibung erzeugende Oberfläche mit einer unteren Fläche bzw. Ebene und einer höheren Fläche bzw. Ebene mit einer geneigten Oberfläche (152) zwischen den genannten Ebenen aufweist, und wobei die äußere Kante der genannten höheren Ebene im wesentlichen geradlinig ist.

24. Vorrichtung nach einem der Ansprüche 8 bis 23, die eine Gleiteinrichtung (160) einschließt, die an den genannten geraden Streifenabschnitten an der genannte Platte (46) angeordnet ist, um am Streifenrand anzugreifen und die Bewegung des Streifens gegen das Spulenzentrum hin zu verstärken, wobei die genannte Gleiteinrichtung (160) eine konvexe Innenkante (161) mit einer nach oben gedrehten Lippe aufweist.

25. Vorrichtung nach einem der Ansprüche 8 bis 23, die eine Gleiteinrichtung (160) einschließt, die an den genannten geraden Streifenabschnitten an der genannten Platte (46) angeordnet ist, um am Streifenrand anzugreifen und die Bewegung des Streifens gegen das Spulenzentrum hin zu verstärken, wobei die genannte Gleiteinrichtung (160) eine Innenkante (161) mit einem vorragenden konvexen Mittelabschnitt zwischen Endabschnitten aufweist, wobei der genannte Mittelabschnitt eine nach oben gedrehte Lippe aufweist.

26. Verfahren zum kontinuierlichen Speichern eines Materialstreifens in einer Spule (48) auf einer ebenen Platte (46), die Antriebsmittel zum Drehen der Platte (46) aufweist, wobei die Spule (48) Kante an Kante an der Platte (46) liegt und der Streifen einen hereinkommenden Streifenabschnitt, der zur Spulenperipherie führt, und einen ausgehenden Streifenabschnitt aufweist, der vom Spulenzentrum wegführt, durch
das Aufbringen des hereinkommenden Streifenabschnitts auf die Peripherie der Spule (48) aus dem Streifen auf der Platte (46), während die Platte (46) sich dreht, dadurch gekennzeichnet, daß auf der Platte abwechselnde geradlinige und konkave Abschnitte vorhanden sind, durch das Aufbringen des hereinkommenden Streifenabschnitts in einer geraden Anzahl an im wesentlichen geradlinigen Streifenabschnitten, die an abgerundeten Ecken aneinandergefügt sind, wodurch abwechselnde gerade und ungerade Streifenabschnitte geschaffen werden, und auch gekennzeichnet durch das Aufbringen eines nach innen gerichteten Drucks auf die geraden Streifenabschnitte, um nur die geraden Streifenabschnitte in konkave Streifenabschnitte zu formen, und das Aufbringen eines nach innen gerichteten Drucks auf die ungeraden Streifenabschnitte, um nur die ungeraden Streifenabschnitte in den im wesentlichen geraden Streifenabschnitten zu halten bzw. beizubehalten.

27. Verfahren nach Anspruch 26, das den Schritt des Aufbringens einer Schleppkraft auf die ungeraden Streifenabschnitte an einem Streifenrand bzw. einer Streifenkante umfaßt, um der Bewegung des Streifens gegen das Zentrum der Spule (48) hin Widerstand zu leisten.

28. Verfahren nach Anspruch 26 oder 27, das den Schritt des Aufbringens einer zurückhaltenden Kraft auf die geraden Streifenabschnitte an einem Streifenrand bzw. einer Streifenkante in einer konkaven Biegung einschließt, wenn der Streifen sich nach innen gegen das Zentrum der Spule (48) hinbewegt, und das Loslassen der Kraft zur im wesentlichen gleichen Zeit entlang dem bzw. der gebogenen Rand bzw. Kante.

29. Verfahren nach einem der Ansprüche 26 bis 28, worin der Streifen Zahnrollenlöcher entlang seiner Länge aufweist, und
das den Schritt des Antreibens des Streifens mit einer Zahnrolle einschließt, während die Platte sich dreht, um bei jeder Umdrehung der Platte (46) die gleiche Anzahl an Streifenzahnrollenlöchern auf die Spule (48) aufzubringen.

30. Verfahren nach einem der Ansprüche 26 bis 29, das folgende Schritte umfaßt:
das Entfernen des herauskommenden Streifenabschnitts vom Zentrum der Spule (48); und
das Aufbringen eines hereinkommenden Streifenabschnitts auf die Peripherie der Spule (48) mit der gleichen Länge wie jener, die vom Zentrum der Spule (48) entfernt wird, pro Umdrehung der Platte (46);
das kontinuierliche Berühren der Spule (48) mit einer Druckwalze (85), während die Spule sich dreht; und
das automatische Einstellen der Position der Druckwalze (85), sodaß der äußere Umfang der Spule (48) auf der Platte (46) bei jeder Umdrehung der Platte im wesentlichen gleich der Länge an Streifen ist, der von der Platte entfernt wird.

## Revendications

1. Appareil pour le stockage en continu d'une bande de matériau sur une bobine (48), comprenant un plateau plat (46) et des moyens d'entraînement pour faire tourner ledit plateau (46), la bobine (48) reposant sur chant sur ledit plateau (46) et la bande comprenant une portion de bande entrante menant à la périphérie de la bobine et une portion de bande sortante menant depuis le centre de la bobine,
des moyens (87) pour appliquer la portion de bande entrante à la périphérie de la bobine (48) de la bande sur ledit plateau (46) lorsque ledit plateau (46) tourne, caractérisé en ce que lesdits moyens (87) appliquent la bande en un nombre pair de sections de bande essentiellement rectilignes reliées à des coins courbés fournissant, en alternance, des sections de bande rectilignes paires et impaires; et en ce qu'on a prévu
des moyens (85) pour appliquer de manière continue une pression vers l'intérieur auxdites sections de bande paires pour former lesdites sections de bande paires en des sections de bande concaves, lesdites sections de bande impaires restant essentiellement rectilignes.

2. Appareil selon la revendication 1, comprenant des moyens de résistance (150) positionnés sur ledit plateau auxdites sections de bande impaires pour venir en prise avec le bord de bande et pour résister à un déplacement de la bande vers le centre de la bobine.

3. Appareil selon la revendication 2, dans lequel ledit moyen de résistance (150) présente une surface produisant de la friction avec un niveau plus faible et un niveau plus élevé, avec une surface inclinée (152) entre lesdits niveaux, et le bord externe dudit niveau plus élevé étant essentiellement rectiligne.

4. Appareil selon l'une des revendications précédentes, comprenant des moyens coulissants (160) positionnés sur ledit plateau auxdites sections de bande paires pour venir en prise avec le bord de la bande et pour renforcer le mouvement de la bande vers le centre de la bobine, lesdits moyens coulissants (160) possédant un bord interne convexe (161) présentant une lèvre tournée vers le haut.

5. Appareil selon l'une des revendications 1 à 4, comprenant des moyens coulissants (160) positionnés sur ledit plateau (46) auxdites sections de bande paires pour venir en prise avec le bord de la bande et pour renforcer le mouvement de la bande vers le centre de la bobine, lesdits moyens coulissants (160) possédant un bord interne (161) avec une section centrale convexe faisant saillie entre des sections d'extrémité, ladite section centrale présentant une lèvre tournée vers le haut.

6. Appareil selon l'une des revendications précédentes, dans lequel la bande présente des perforations sur sa longueur et ledit moyen d'application comprend un tambour denté (89) pour venir en prise avec lesdites perforations de portions de bande entrantes, et
l'appareil comprend des moyens (116,120) pour entraîner ledit tambour denté (89) lorsque ledit plateau (46) tourne de façon à appliquer le même nombre de perforations de bande à ladite bobine (48) pour chaque tour dudit plateau (46).

7. Appareil selon l'une des revendications précédentes, dans lequel ledit moyen (87) pour appliquer la portion de bande entrante comprend un régulateur d'application de bande comprenant :
un bras tendeur (95) monté de façon pivotante sur ledit moyen (87), afin d'appliquer la portion de bande entrante en vue d'un déplacement entre les positions de bande lâche et de bande tendue;
un rouleau tendeur (92) supporté sur ledit bras tendeur (95);
un moyen formant ressort (106) pour solliciter ledit bras tendeur (95) vers ladite position lâche de bande;
des moyens de guidage de bande (88,89,90,91) pour guider la bande entrante autour du rouleau tendeur (92) en amont de ce rouleau (92) et un bras de poussée (86) avec un rouleau de poussée (85) supporté sur celui-ci;
un levier de bras tendeur (102) monté sur ledit moyen (87) pour appliquer et venir en prise avec ledit bras tendeur (95) en vue d'un déplacement avec ledit bras tendeur (95); et
des moyens (86a,86b) pour monter ledit bras poussoir (86) sur ledit levier de bras tendeur (102).

8. Appareil pour le stockage en continu d'une bande de matériau sur une bobine (48), l'appareil comprenant un plateau plat (46) et des moyens d'entraînement pour faire tourner ledit plateau (46), la bobine (48) reposant sur chant sur le plateau (46) et la bande comprenant une portion de bande entrante menant à la périphérie de la bobine (48) et une portion de bande sortante menant depuis le centre de bobine (48), caractérisé par
une came montée à rotation avec ledit plateau (46) autour de son centre, ladite came possédant une piste de came (72) avec un nombre pair de sections de piste essentiellement rectilignes reliées à des coins courbés fournissant, en alternance, des sections de piste de came paires et impaires;
des moyens pour appliquer la portion de bande entrante à la périphérie de la bobine (48) de la bande sur ledit plateau (46) lorsque ledit plateau (46) tourne, suivant un nombre pair de sections de bande essentiellement rectilignes fournissant, en alternance, des sections de bande paires et impaires, ledit moyen d'application comprenant
un suiveur de came (73) pour venir en prise avec ladite piste de came (72) avec ledit moyen d'application se déplaçant vers et au loin dudit centre lorsque ledit plateau (46) tourne et pour faire varier la distance depuis ledit centre au point d'application de la portion de bande entrante,
un rouleau (87) pour guider la bande entrante sur ladite bobine (48), et
un deuxième rouleau (85) pour venir en prise avec ladite bobine (48) à sa périphérie externe auxdites sections de bande paires pour solliciter seulement lesdites sections de bande paires de ladite bobine (48) vers l'intérieur vers ledit centre suivant une forme concave, tout en maintenant la tension dans ladite bande auxdites sections de bande impaires pour solliciter ladite bobine vers l'intérieur vers ledit centre suivant une forme essentiellement rectiligne.

9. Appareil selon la revendication 8, dans lequel ledit suivent de came (73) comprend un premier engrenage et ladite piste de came (72) comprend un deuxième engrenage, lesdits premier et deuxième engrenages venant en prise l'un avec l'autre, afin d'entraîner ledit premier engrenage comme une fonction de rotation dudit plateau (46).

10. Appareil selon la revendication 8 ou la revendication 9, dans lequel ledit deuxième rouleau (85) est positionné sur ledit moyen d'application pour venir en prise de manière continue avec ladite bobine (48) lorsqu'elle tourne.

11. Appareil selon l'une des revendications 8 à 10, dans lequel la périphérie dudit deuxième rouleau (85) est à une distance plus réduite dudit centre que la périphérie dudit premier rouleau (97) pour espacer ledit premier rouleau (97) de ladite bobine (48).

12. Appareil selon l'une des revendications 8 à 11, dans lequel ledit moyen d'application comprend un bras de support (70) pivoté en vue d'un déplacement dans un plan horizontal, et un bras de poussée (86) avec ledit deuxième rouleau (85) supporté sur celui-ci, ledit bras de poussée (86) pivotant sur ledit bras de support (70).

13. Appareil selon l'une des revendications 8 à 12, dans lequel ledit moyen d'application comprend :
un tambour denté d'entraînement de film (89);
un rouleau tendeur sous l'action d'un ressort (92);
une courroie d'entraînement sans fin (116); et
des moyens (117,118) pour positionner ladite courroie d'entraînement (116) pour venir en prise avec ledit suiveur de came (73) et ledit tambour denté (89), la bande de matériau se déplaçant autour dudit tambour denté (89) devant ledit rouleau tendeur (92) et ledit premier rouleau (93) sur ladite bobine (48).

14. Appareil selon la revendication 8, dans lequel ledit moyen d'application comprend un mouvement à quatre liaisons comprenant :
un premier bras (70) comme premier élément de liaison, ledit suiveur de came (73) étant monté sur celui-ci;
un deuxième bras (86) comme deuxième élément de liaison et monté de façon pivotante sur ledit premier bras (70) à un point intermédiaire dudit deuxième bras (86), ledit deuxième rouleau (85) étant monté sur celui-ci, et ledit premier moyen formant rouleau (87) monté sur celui-ci;
un support (87a) comme troisième élément de liaison, ledit premier bras (70) étant monté de façon pivotante sur celui-ci; et
un organe de liaison (173) comme quatrième élément de liaison et monté entre ledit support (87a) et ledit deuxième bras (86).

15. Appareil selon la revendication 14, comprenant un bras de manivelle (172) monté de façon pivotante audit point intermédiaire, et comprenant un moyen pour fixer de manière réglable l'angle entre les deux bras.

16. Appareil selon la revendication 8, dans lequel ledit moyen d'application comprend un bras de support (70) pivoté pour un déplacement dans un plan horizontal, ledit deuxième rouleau (85) étant monté sur celui-ci.

17. Appareil selon l'une des revendications 8 à 16, dans lequel ledit moyen d'application comprend un régulateur d'application de bande comprenant :
un bras tendeur (95) monté de façon pivotante sur ledit moyen d'application pour un mouvement entre les positions de bande lâche et de bande tendue;
un rouleau tendeur (92) supporté sur ledit bras tendeur (95);
un moyen formant ressort (106) supporté sur ledit moyen d'application pour solliciter ledit bras tendeur (95) vers ladite position lâche de bande; et
des moyens de guidage de bande (91) pour guider la bande entrante autour dudit rouleau tendeur (92) en amont de ce premier rouleau (92);
un bras de poussée (86) supportant ledit deuxième rouleau (85) sur celui-ci;
un levier de bras tendeur (102) monté sur ledit moyen d'application et venant en prise avec ledit bras tendeur (95) pour un mouvement avec ledit bras tendeur (95); et
des moyens (86a,86b) pour monter ledit bras de poussée (86) sur ledit levier de bras tendeur (102).

18. Appareil selon l'une des revendications 8 à 17, dans lequel lesdites sections de piste de came paires sont légèrement concaves et lesdites sections de piste de came impaires sont rectilignes.

19. Appareil selon l'une des revendications 8 à 16, dans lequel lesdites sections de piste de came paires sont rectilignes et lesdites sections de piste de came impaires sont légèrement concaves.

20. Appareil selon l'une des revendications 8 à 16, dans lequel à la fois lesdites sections de piste de came paires et impaires sont rectilignes.

21. Appareil selon la revendication 8, dans lequel la bande présente des perforations sur sa longueur, et ledit moyen d'application comprend un tambour denté (89) pour venir en prise avec lesdites perforations de portions de bande entrantes, et comprenant
des moyens (116,120) pour entraîner ledit tambour denté (89) lorsque ledit plateau (46) tourne pour appliquer le même nombre de perforations de bande à ladite bobine (48) pour chaque tour dudit plateau (46).

22. Appareil selon l'une des revendications 8 à 21, comprenant un moyen de résistance (150) positionné sur ledit plateau (46) auxdites sections de bande impaires pour venir en prise avec le bord de bande et pour résister à un déplacement de la bande vers le centre de la bobine.

23. Appareil selon la revendication 22, dans lequel ledit moyen de résistance (150) a une surface produisant de la friction avec un niveau plus bas et un niveau plus élevé, avec une surface inclinée (152) entre lesdits niveaux, et le bord externe dudit niveau plus élevé étant essentiellement rectiligne.

24. Appareil selon l'une des revendications 8 à 23, comprenant des moyens coulissants (160) positionnés sur ledit plateau (46) auxdites sections de bande paires pour venir en prise avec le bord de bande et renforcer le déplacement de la bande vers le centre de la bobine, lesdits moyens coulissants (160) présentant un bord interne convexe (161) avec une lèvre tournée vers le haut.

25. Appareil selon l'une des revendications 8 à 23, comprenant des moyens coulissants (160) positionnés sur ledit plateau (46) auxdites sections de bande paires pour venir en prise avec le bord de bande et pour renforcer le déplacement de la bande vers le centre de la bobine, lesdits moyens coulissants (160) présentant un bord interne (161) avec une section centrale convexe en saillie entre les sections d'extrémité, ladite section centrale présentant une lèvre tournée vers le haut.

26. Procédé pour le stockage en continu d'une bande de matériau sur une bobine (48) sur un plateau plat (46) possédant des moyens d'entraînement pour faire tourner le plateau (46), la bobine (48) reposant sur chant sur le plateau (46) et la bande présentant une portion de bande entrante menant à la périphérie de bobine et une portion de bande sortante menant depuis le centre de la bobine, par
application de la portion de bande entrante vers la périphérie de la bobine (48) de la bande sur le plateau (46) lorsque le plateau (46) tourne, caractérisé par l'obtention, en alternance, de segments rectilignes et concaves sur le plateau, par application de la portion de bande entrante en un nombre pair de sections de bande essentiellement rectilignes reliées à des coins courbés réalisent, en alternance, des sections de bande paires et impaires, et caractérisé également par l'application d'une pression vers l'intérieur aux sections de bande paires pour former seulement les sections de bande paires en des sections de bande concaves et par application d'une pression vers l'intérieur aux sections de bande impaires pour maintenir seulement les sections de bande impaires dans les sections de bande essentiellement rectilignes.

27. Procédé selon la revendication 26, comprenant l'étape consistant à appliquer une force de traction aux sections de bande impaires à un bord de bande pour résister à un déplacement de la bande vers le centre de la bobine (48).

28. Procédé selon la revendication 26 ou la revendication 27, comprenant l'étape consistant à appliquer une force de retenue aux sections de bande paires à un bord de bande dans une courbe concave lorsque la bande se déplace vers l'intérieur vers le centre de la bobine (48), et à relâcher la force essentiellement en même temps le long du bord courbé.

29. Procédé selon l'une des revendications 26 à 28, dans lequel la bande a des perforations sur sa longueur, et
comprenant l'étape consistant à entraîner la bande avec un tambour denté lorsque le plateau tourne pour appliquer le même nombre de perforations de bande à la bobine (48) pour chaque tour du plateau (46).

30. Procédé selon l'une des revendications 26 à 29, comprenant les étapes consistant à :
retirer la portion de bande sortante du centre de la bobine (48); et
appliquer à la périphérie de la bobine (48) par tour du plateau (46), une portion de bande entrante de la même longueur que celle retirée du centre de la bobine (48);
mettre la bobine (48) en contact continu avec un rouleau poussoir (85) lorsque la bobine tourne; et
régler automatiquement la position du rouleau poussoir (85) de sorte que la circonférence externe de la bobine (48) sur le plateau (46) sera essentiellement égale à la longueur de bande retirée du plateau à chaque tour du plateau.
